# EUROPÄISCHE PATENTSCHRIFT

(11) **EP 3 077 308 B1**
(45) Veröffentlichungstag und Bekanntmachung des Hinweises auf die Patenterteilung: **21.02.2018**
(21) Anmeldenummer: 14806594.9
(22) Anmeldetag: 01.12.2014
(51) Int. Cl.: B29B 11/16, B26D 1/40, B26D 7/01, B65H 29/24, B65H 35/08

(54) **VORRICHTUNG UND VERFAHREN ZUM HERSTELLEN VON FASERPLATINEN**
DEVICE AND METHOD FOR PRODUCING FIBRE BOARDS
DISPOSITIF ET PROCÉDÉ POUR LA FABRICATION DE PLATINES DE FIBRES

(30) Priorität: 04.12.2013 DE 102013224835; 17.10.2014 DE 102014221085
(43) Veröffentlichungstag der Anmeldung: 12.10.2016
(73) Patentinhaber: Voith Patent GmbH, 89522 Heidenheim (DE)
(72) Erfinder: UFER, Jaromir, 80807 München (DE)
(86) Internationale Anmeldenummer: PCT/EP2014/076066
(87) Internationale Veröffentlichungsnummer: WO 2015/082385

(56) Entgegenhaltungen:
- WO-A1-95/15901
- US-A1- 2008 196 564

## Beschreibung

Die Erfindung betrifft eine Vorrichtung und ein Verfahren zum Herstellen von Faserplatinen. Sogenannte Faserplatinen sind ebene oder leicht dreidimensionale Platten aus Fasermaterial, welche mehrere oft zahlreiche Lagen von Fasern aufweisen. Die Fasern können in den verschiedenen Lagen unterschiedliche Ausrichtung haben. Solche Faserplatinen werden als Halbzeuge für die Herstellung von Bauteilen aus faserverstärkten Kunststoffen verwendet. Sie können neben dem Fasermaterial zusätzlich Bindermaterial oder Matrixmaterial, d.h. Kunststoffmaterial, enthalten. Die weitere Verarbeitung der Faserplatinen erfolgt durch Umformen und Aushärten oder Konsolidieren. Es können zusätzlich auch noch Stanz- oder Schneidvorgänge vorgesehen werden.

Ein Beispiel für die Herstellung von Faserplatinen, in diesem Fall solche, die bereits mit Matrixmaterial imprägniert sind (sogenannte Prepregplatten), findet sich in der EP 0606830 A1. In einer Ablängstation werden von einem vorgefertigten Prepregband mit längsorientierten Fasern Prepregstücke abgeschnitten und nebeneinander zu einer Faserlage (Laminatlage) zusammengelegt und abtransportiert. Um Faserlagen mit verschiedener Faserorientierung herstellen zu können, sind mehrere Ablängstationen vorgesehen, die die Prepregbänder unter verschiedenen Winkeln abschneiden und ablegen. Je nach Anordnung der Prepregstücke können so Lagen mit längsorientierter, querorientierter oder diagonaler Faserausrichtung bezogen auf die Lagen bereitgestellt werden. Um die Lagen besser handhaben zu können, werden die Prepregstücke am Rand miteinander verschweißt. Diese Faserlagen werden anschließend übereinander gestapelt, wodurch Faserplatinen entstehen. Durch Stapelung unterschiedlich orientierter Faserlagen können Faserplatinen mit gezielt eingestellten Festigkeitseigenschaften hergestellt werden.

Ein Nachteil der bisher bekannten Verfahren und Vorrichtungen zur Herstellung von Faserplatinen ist deren relativ geringe Produktionsgeschwindigkeit. Gemessen wird die Produktionsgeschwindigkeit oft als Ablegerate, d.h. wieviel Fasermaterial in kg pro Zeiteinheit abgelegt werden kann. Ein weiterer Nachteil ist die geringe Variationsmöglichkeit bei der Anordnung der Fasern bezüglich ihrer Ausrichtung innerhalb einer Lage und bei der Umstellung auf ein anderes Produkt. Um kleinere Bauteile in hohen Stückzahlen, wie zum Beispiel in der Automobilindustrie, wirtschaftlich herstellen zu können, sind höhere Produktionsgeschwindigkeiten notwendig. Außerdem sind aus der US 2008/0196564 A1 eine Vorrichtung und ein Verfahren bekannt, wobei mittels eines Ablegeschneidwerkes Abschnitte von einer Bahn getrennt und auf einen Träger abgelegt werden. Die Aufgabe der Erfindung ist es, eine Vorrichtung und ein Verfahren zu schaffen, das eine höhere Produktivität, insbesondere eine höhere Ablegerate bietet, bei hoher Genauigkeit und hoher Variationsmöglichkeit bezüglich der Faserausrichtung und der Anordnung.

Erfindungsgemäß wird die Aufgabe durch eine Vorrichtung nach Anspruch 1 gelöst. Diese Vorrichtung enthält einen Platinenträger und mehrere, mindestens vier Ablegeschneidwerke zum Trennen von Fasermaterial, insbesondere von strang- oder bandförmigem Fasermaterial, in Abschnitte und zum Ablegen der Abschnitte. Diese Ablegeschneidwerke weisen je eine Trennwalze mit mehreren am Walzenumfang der Trennwalze angeordneten Messern und je eine Gegenwalze auf, die gegenläufig rotierbar sind und die so angeordnet sind, dass das Fasermaterial zwischen Trennwalze und Gegenwalze hindurchgeführt und dabei von einem der Messer im Zusammenwirken mit der Gegenwalze durchtrennt werden kann, so dass dadurch ein Abschnitt entsteht. Des Weiteren sind an der Gegenwalze oder an der Trennwalze mehrere integrierte Haltebereiche und mehrere Ablöseelemente vorhanden, so ausgebildet, dass jeweils zumindest einer der Haltebereiche eine Haltekraft auf einen jeweiligen Abschnitt ausüben kann, wodurch der Abschnitt an der Walze mit den Haltebereichen gehalten und nach dem Durchtrennen ein Stück mit dem Walzenumfang dieser Walze mitbewegt werden kann. Die Ablöseelemente sind so ausgebildet, dass sie zum Ablegen den Abschnitt vom Walzenumfang weg bewegen können und so dass der jeweilige Abschnitt nach dieser Mitbewegung an der Walze abgelegt werden kann. Der Platinenträger ist dabei unter den Ablegeschneidwerken hindurch in zumindest eine Bewegungsrichtung (Y) verschiebbar und die Ablegeschneidwerke sind im Wesentlichen stationär und derart nebeneinander angeordnet, dass die Abschnitte dieser Ablegeschneidwerke gleichzeitig nebeneinander auf den Platinenträger abgelegt werden können.

Die Vorteile bestehen darin, dass durch das gut automatisierbare Schneiden der Abschnitte mithilfe von Walzen und das parallele Ablegen von Abschnitten aus mehreren Ablegeschneidwerken auf den Platinenträger sehr hohe Ablegeraten realisiert werden können, was bisher nicht möglich war. Dabei wird durch das Halten der Abschnitte an der Walzenoberfläche und das kontrollierte Ablegen der Abschnitte über Stempelelemente trotzdem eine gute Genauigkeit beim Ablegen mit gleichzeitig hoher Flexibilität erreicht. Insbesondere sind Ablegeraten zwischen 5 und 8 kg/h pro Ablegeschneidwerk möglich. Damit sind mit der Vorrichtung Ablegeraten von deutlich mehr als 20 kg/h möglich. Und noch weit darüber hinaus, wenn zum Beispiel 8, 10 oder noch mehr Ablegeschneidwerke nebeneinander vorhanden sind.

Unter im Wesentlichen stationär wird verstanden, dass die einzelnen Ablegeschneidwerke so ausgeführt sind, dass sie im Betrieb keine größeren translatorischen Bewegungen machen. Die Ablegeschneidwerke können allenfalls um geringe Stellwege (ΔX, ΔY, ΔZ), die insbesondere kleiner sind als die Länge A der Abschnitte, in ihrer stationären Position verschoben werden und/oder um die senkrecht zum Platinenträger gedachte Z-Achse gedreht werden. Die Länge A ist die geschnittene Länge der Abschnitte.

Als Fasermaterial kommen beispielsweise Rovings, Faserstränge oder Bänder, insbesondere unidirektionale Faserbänder, Gewebebänder, Gelegebänder oder Vliesbänder in Frage. Die Fasern für das Fasermaterial können Kohlefasern, Glasfasern, Aramidfasern oder andere Fasern sein. Ein Faserstrang kann aus verdrehten oder versponnenen Fasern bestehen. Ein Faserstrang aus zahlreichen Fasern, die unverdreht gleichzeitig von einer Spule oder aus einem Knäuel abgewickelt werden, nennt man Garnbündel oder Roving. Dabei können die Rovings aus bis zu mehreren Zehntausend endlosen, parallel angeordneten Einzelfasern, die auch Filamente genannt werden, bestehen. Wird ein Roving als Fasermaterial eingesetzt, so wird dieser bevorzugt vor dem Trennen aufgespreizt, so dass die Fasern nebeneinander liegen und in dieser Lage vom Haltebereich gehalten und anschließend abgelegt werden. Das Fasermaterial besteht bevorzugt überwiegend oder vollständig aus Fasern. Es kann aber durchaus auch Bindermaterial oder Matrixmaterial enthalten. Und das Fasermaterial kann auch größere Mengen Binder- oder Matrixmaterial enthalten, zum Beispiel wenn sogenanntes Prepreg, insbesondere Thermoplast-Prepreg, verarbeitet wird. Prepreg ist ein Fasermaterial, das bereits mit Matrixmaterial imprägniert ist, welches später beispielsweise nach dem Umformen ausgehärtet oder konsolidiert wird. Als Matrixmaterial kommen Duromer, wie z.B. Epoxy-Harz oder Thermoplast in Frage.

Es können ebenso mehrere Rovings oder Faserstränge oder Bänder gleichzeitig nebeneinander einem Ablegeschneidwerk zugeführt und in Abschnitte getrennt werden. Die Abschnitte werden in der Breite dann von mehreren Faserstränge oder Bändern gebildet. Die Breite der Abschnitte ist bevorzugt zwischen 10 und 100 mm. Mit der erfindungsgemäßen Vorrichtung können insbesondere auch längere Abschnitte hergestellt und mit hoher Ablegerate kontrolliert abgelegt werden. Bevorzugte Längen für die Abschnitte sind zwischen 10 und 300 mm, besonders bevorzugt zwischen 40 und 100 mm. Bevorzugt sind die Abstände der benachbarten Messer auf dem Walzenumfang der Trennwalze entsprechend ausgelegt.

Bevorzugt haben die Trennwalzen jeweils maximal 20, besonders bevorzugt jeweils 4 bis 6 Messer über den Umfang verteilt. Als bevorzugte Größe für die Trennwalzen wird ein Durchmesser zwischen 50 und 300 mm, besonders bevorzugt zwischen 100 und 200 mm angesehen.

Weitere vorteilhafte Merkmale der erfindungsgemäßen Ausführung, finden sich in den Unteransprüchen.

In einer weiteren bevorzugten Ausführung sind eine oder mehrere Transfereinheiten vorgesehen sind, die so ausgebildet sind, dass die jeweiligen Abschnitte von den Ablöseelementen zunächst auf der Oberfläche der Transfereinheit abgelegt werden und dann von dort auf den Platinenträger übertragen werden können. Als mögliche Transfereinheit kommt beispielsweise eine Saugwalze oder ein Vakuumförderband in Frage. Die Drehrichtung der Saugwalze bzw. des Vakuumförderbandes ist bevorzugt quer, besonders bevorzugt senkrecht zur Drehachse der Walze des Ablegeschneidwerkes. Es kann zu einem einzelnen Ablegeschneidwerk eine jeweilige Transfereinheit zugeordnet werden oder es können mehrere Ablegeschneidwerke ihre Abschnitte nebeneinander auf der Oberfläche einer Transfereinheit ablegen, so dass die Abschnitte dann gemeinsam von der Transfereinheit auf den Platinenträger übertragen werden. Es könnte auch nur eine einzige gemeinsame Transfereinheit vorhanden sein, auf deren Oberfläche alle Ablegeschneidwerke ihre Abschnitte ablegen.

Der Vorteil einer vorhandenen Transfereinheit ist, dass damit ein gewisser Abstand zwischen Ablegeschneidwerk und Platinenträger überbrückt werden kann, was die Vorrichtung flexibler macht. Ein weiterer Vorteil ist, dass durch die Transfereinheit eine Anziehungskraft (zum Beispiel durch Vakuum) auf die Abschnitte ausgeübt werden kann und somit eine kontrollierte Abnahme vom Ablegeschneidwerk möglich ist. Insbesondere kann damit eine immer gleiche Anziehungskraft ausgeübt werden. Beim Platinenträger ist dies nicht so einfach möglich, so würde sich zum Beispiel bei Verwendung einer Vakuumansaugung die Anziehungskraft bei der Ablage mehrerer Lagen deutlich reduzieren und würde nicht mehr wirken.

In einer weiteren Ausführung ist die Vorrichtung so ausgebildet, dass der geringste Abstand beim Ablegen zwischen Ablöseelement und Platinenträger bzw. zwischen Ablöseelement und Oberfläche der Transfereinheit - je nachdem ob eine Transfereinheit vorhanden ist oder nicht - zwischen 0 und 70 mm, bevorzugt zwischen 1 und 10 mm. Dadurch ist ein kontrolliertes Ablegen durch die Ablöseelemente auch bei hoher Geschwindigkeit möglich. Insbesondere bei Verwendung von radial verschiebbaren Stempelelementen kann der Abstand der ausgefahrenen Stempelelemente zur Fläche, auf die abgelegt wird, größer als 0 mm sein, d.h. die Stempel berühren diese Fläche beim Ablegen nicht. Dadurch wird vermieden, dass bereits abgelegte Abschnitte nachträglich verschoben werden. Außerdem werden Verschleiß, Faserschädigung und unerwünschte Geräuschentwicklung reduziert.

Außerdem können an der Vorrichtung eine oder mehrere Binderauftragseinrichtungen vorgesehen sein, die so angeordnet sind, dass sie Bindermaterial auf die Abschnitte auftragen können. Dies kann vor dem Ablegen der Abschnitte, zum Beispiel auf der Transfereinheit erfolgen, oder nach dem Ablegen auf dem Platinenträger. Als Bindermaterial kommen beispielsweise Kleber oder Thermoplast oder Matrixmaterial in Frage. Das Bindermaterial kann als Lösung oder Schmelze oder Harz oder Pulver aufgetragen werden.

Besonders vorteilhaft ist es, wenn die Ablöseelemente als im Wesentlichen radial verschiebbare Stempelelemente ausgeführt sind. Dadurch kann der Abschnitt zuverlässig von der Walzenoberfläche weg bewegt werden. Diese Bewegung der Stempelelemente kann beispielsweise durch eine Kulissenführung erfolgen. Die Ablöseelemente können aber auch entsprechend angeordnete Abschäldrähte oder Abblaseelemente sein.

Alternativ oder zusätzlich zur Ausführung als Stempelelement können die Ablöselelemente als Halteelemente mit integriertem Haltebereich ausgeführt sein. Zum Beispiel derart, dass die Halteelemente besaugt werden. Zum Ablegen kann die Vakuumversorgung unterbrochen werden und/oder es wird ein Abblasen aktiviert.

Die Haltebereiche am Stempelelement oder auf der Oberfläche der Walze können so ausgeführt sein, dass die Haltekraft durch Vakuum an einer gelochten oder durchlässigen Fläche aufgebracht wird. Wobei eine Vakuumversorgung vorgesehen ist, die in dem Umfangsbereich, in dem der Abschnitt abgelegt werden soll, abschaltbar ist oder unterbrochen werden kann. Alternativ kann die Haltekraft durch elektrostatische Anziehung erzeugt werden. Denkbar sind auch mechanische Elemente, wie Klammern oder Nadeln.

In einer besonders vorteilhaften Ausführung sind die Schneidwerke in zwei oder mehr Reihen in Bewegungsrichtung (Y) des Platinenträgers hintereinander angeordnet, insbesondere so dass die Ablegeschneidwerke einer Reihe auf Lücke zu den Schneidwerken der anderen Reihe angeordnet sind. Bei mehreren Reihen zum Beispiel drei oder vier Reihen können die Ablegeschneidwerke jeweils kaskadenartig versetzt zueinander angeordnet sein. Durch Verschieben des Platinenträgers in Bewegungsrichtung (Y) und mehrfaches Ablegen von Abschnitten kann so nach und nach eine geschlossene Faserlage auf dem Platinenträger abgelegt werden. Die Gesamtbreite der abgelegten Lage ergibt sich aus der Anzahl der nebeneinander angeordneten Ablegeschneidwerke und der Länge der Abschnitte. Besonders bevorzugt sind so viele Ablegeschneidwerke nebeneinander vorgesehen, dass sie die gesamte Breite der gewünschten Faserplatine mit einem Ablegevorgang abdecken. Bei einer Abschnittlänge von beispielsweise 100 mm und 12 Ablegeschneidwerken in drei Reihen zu je vier Ablegeschneidwerken auf Lücke angeordnet, ergibt sich damit eine Ablegebreite von 1,2 m für die Faserplatine. Durch die Anordnung in mehreren Reihen entsteht genug Platz für die Ablegeschneidwerke und ihre Antriebs- und Versorgungseinheiten, ohne dass sie kollidieren würden und ohne dass Lücken in der Faserlage zwischen den abgelegten Abschnitten entstehen.

Die Ablegeschneidwerke können so ausgeführt sein, dass sie um geringe Stellwege (ΔX, ΔY, ΔZ), die kleiner sind als die Länge A der Abschnitte, in ihrer stationären Position verschoben werden können. Des Weiteren können sie gegebenenfalls um die senkrecht zum Platinenträger gedachte Z-Achse drehbar ausgeführt sein. Durch diese Stellbewegungen ist eine Einstellung der genauen Ausrichtung und Orientierung der Abschnitte auf dem Platinenträger möglich. Damit ist auch ein bogenförmiges Ablegen der Abschnitte möglich. Durch eine Stellbewegung in Z-Richtung können auch leicht dreidimensional ausgebildete Platinenträger belegt werden. D.h. somit können leicht vorgeformte Faserplatinen hergestellt werden. Die Bewegung, um nacheinander verschiedene Bereiche einer Faserlage ablegen zu können erfolgt nicht über eine Bewegung der Ablegeschneidwerke, sondern über eine Bewegung des Platinenträgers. Die Stellwege sind nur vorgesehen um das Ablagemuster oder die Ablagegenauigkeit zu beeinflussen.

Vorteilhaft ist es, wenn die verschiedenen Ablegeschneidwerke einzeln gesteuert werden können. Dadurch kann die genaue Ablageposition, die Spreizung oder eine andere Einstellung positionsgenau gesteuert werden.

Weiterhin ist es vorteilhaft, wenn der Platinenträger zusätzlich zur Bewegungsrichtung Y auch quer dazu in X-Richtung und/oder in der Höhe Z bewegt werden kann. Dadurch können auch breitere Faserplatinen als es der Anzahl der Ablegeschneidwerke entspricht, hergestellt werden. Außerdem kann der Platinenträger auch um die senkrecht dazu gedachte Z-Achse drehbar ausgeführt sein, so dass verschiedene Winkel für die Faserausrichtung in den einzelnen Faserlagen erzeugt werden können.

Um eine effiziente Produktion höherer Stückzahlen zu ermöglichen, kann der Platinenträger eine Trägerplatte oder eine Folie sein, welche auf einem zumindest in Bewegungsrichtung (Y) bewegbaren Tisch angeordnet ist. Nach dem Ablegen der Faserplatine kann diese zusammen mit der Trägerplatte oder mit der Folie entnommen und weiterverarbeitet werden.

Um die Flexibilität und die Ablegerate noch weiter zu erhöhen können zusätzliche Ablegeschneidwerke vorhanden sein, die geeignet sind weiteres Fasermaterial in Abschnitte zu trennen und diese Abschnitte auf dem Fasermaterial abzulegen, das den Ablegeschneidwerken zugeführt wird. Bevorzugt sind die Achsen der Walzen des weiteren Ablegeschneidwerkes quer zu den Walzenachsen des anderen Ablegeschneidwerkes ausgerichtet. Somit können sogenannte biaxiale oder multiaxiale Faserabschnitte erzeugt und abgelegt werden.

Für das erfindungsgemäße Verfahren wird die Aufgabe durch ein Verfahren nach Anspruch 13 gelöst. Dabei werden unter Verwendung einer erfindungsgemäßen Vorrichtung die folgenden Schritte a)-d) nacheinander ausgeführt:
a) Trennen eines jeweiligen Abschnittes vom Fasermaterial gleichzeitig in den mehreren Ablegeschneidwerken,
b) Halten des jeweiligen Abschnittes an der Gegenwalze oder an der Trennwalze und Mitbewegen des Abschnittes mit dem Walzenumfang dieser Walze gleichzeitig in den mehreren Ablegeschneidwerken,
c) Nebeneinander-Ablegen der jeweiligen Abschnitte gleichzeitig durch die mehreren Ablegeschneidwerke, und
d) Bewegen des Platinenträgers in zumindest eine Bewegungsrichtung (Y),
e) Mehrmalige Wiederholung der Schritte a)-d), derart dass eine Lage aus Abschnitten auf dem Platinenträger erzeugt wird,
zudem werden eine oder mehrere weitere Lagen aus Abschnitten auf der ersten Lage erzeugt, indem die Schritte a-e) wiederholt werden.

Somit wird in effizienter Weise und mit hoher Genauigkeit sowie hoher Flexibiltät bezüglich der Ausgestaltung der Faseranordnung eine Faserplatine erzeugt. Ein weiterer Vorteil besteht darin, dass dieses Verfahren sehr gut automatisierbar ist. Das Verfahren kann gut an verschiedene Produkte, d.h. an verschiedene Vorgaben für den Lagenaufbau oder die Größe der Faserplatine angepasst werden. Zudem können die Faserplatinen, die aus einzelnen Abschnitten aufgebaut sind, sehr gut verformt werden. Damit bieten sie ein gutes Ausgangsmaterial für die Herstellung verschiedener und auch komplexerer Bauteile.

Um eine Faserlage zu fixieren, kann vorteilhafterweise auf die Abschnitte nach dem Ablegen Bindermaterial aufgetragen werden, wobei dieser Binderauftrag insbesondere zwischen Schritt c) und d) oder insbesondere nach Schritt e) und vor Ablegen einer weiteren Lage erfolgt. Der Binderauftrag kann bei Vorhandensein einer Transfereinheit auch nach dem Ablegen der Abschnitte auf der Oberfläche der Transfereinheit und vor Übertragen auf den Platinenträger erfolgen.

In einer weiteren Ausführung, insbesondere wenn der Platinenträger eine Trägerplatte oder eine Folie ist und insbesondere wenn das Bindermaterial pulverförmig aufgetragen wird, kann der Platinenträger mit einer Lage oder mit mehreren Lagen bzw. mit einer Faserplatine aus dem Bereich der Ablegeschneidwerke herausbewegt werden und in den Bereich einer Heizeinrichtung bewegt werden. Die Heizeinrichtung kann das Bindermaterial durch Erwärmen aktivieren. So können im Wechsel auf einem Platinenträger Faserlagen bzw. Faserplatinen abgelegt und anschließend das Bindermaterial aktiviert werden.

Der der Platinenträger kann zudem nach Schritt e) und vor Ablegen einer weiteren Lage in eine Richtung (X) quer zur Bewegungsrichtung (Y) verschoben und/oder in einer Drehrichtung (C) um die Achse Z gedreht werden. Dadurch sind versetze Faserlagen und Faserlagen mit unterschiedlicher Hauptfaserrichtung möglich. Somit lassen sich mit der Vorrichtung sehr flexibel verschiedene Faserplatinen mit angepasster Lagenstruktur herstellen.

Insbesondere können die Ablegeschneidwerke auch so ausgeführt sein, wie die in der noch unveröffentlichten Anmeldung DE 10 2013 224835 des gleichen Anmelders beschriebene Vorrichtung.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Ausschnitt einer erfindungsgemäßen Vorrichtung mit detaillierter Darstellung einer Ausführung eines Ablegeschneidwerkes
- **Fig.2**: Darstellung dieser Ausführung mit Kulissenführung
- **Fig.3**: Ausschnitt einer weiteren erfindungsgemäßen Vorrichtung mit schematischer Darstellung eines Ablegeschneidwerkes
- **Fig.4**: Schematische Darstellung eines anderen Ablegeschneidwerkes
- **Fig.5**: Schematische Darstellung einer erfindungsgemäßen Vorrichtung mit Ablegeschneidwerken in einer Reihe
- **Fig.6**: Schematische Darstellung einer erfindungsgemäßen Vorrichtung mit Ablegeschneidwerken in zwei Reihen
- **Fig.7**: Schematische Darstellung eines Ablegeschneidwerkes mit weiterem Ablegeschneidwerk
- **Fig.8**: Perspektivische, schematische Darstellung einer erfindungsgemäßen Vorrichtung mit Ablegeschneidwerken in zwei Reihen
- **Fig.9**: Schematische Seitenansicht einer Vorrichtung mit Ablegeschneidwerken in zwei Reihen
- **Fig.10**: Schematische Seitenansicht einer weiteren Vorrichtung mit Ablegeschneidwerken in zwei Reihen und Transfereinheit
- **Fig.11**: Schematische Darstellung einer Faserplatine auf einer Folie
- **Fig.12**: Schematische Darstellung einer Faserplatine zwischen zwei Folien

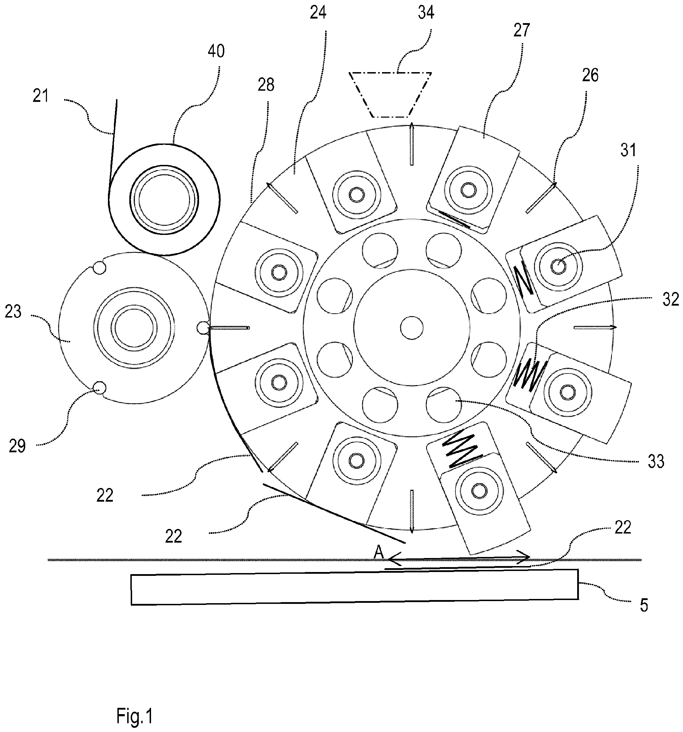

Nachfolgend werden die Figuren detaillierter beschrieben. In Fig.1 ist ein Ausschnitt einer erfindungsgemäßen Vorrichtung mit einer detaillierteren Darstellung eines Ablegeschneidwerkes zu sehen. Das Fasermaterial 21 wird von einer Anpresswalze 40 an die Gegenwalze 23 geführt. Die Trennwalze 24 weist am Umfang angeordnete Messer 26 und Ablöseelemente, die als radial verschiebbare Stempelelemente und als Halteelemente 27 mit integriertem Haltebereich ausgeführt sind, auf. In diesem Fall sind sie als Vakuumhalteelemente ausgeführt. Eines der Messer 26 trennt gerade einen Abschnitt 22 vom Fasermaterial. Die Gegenwalze 23 besitzt passende Vertiefungen 29, in die das jeweilige Messer 26 eingreift. Die Vertiefung 29 kann frei sein, so dass die Fasern des Fasermaterials über der Messerkante gebrochen werden, oder sie ist mit einem elastischen Material gefüllt, z.B. einer Gummirundschnur, so dass die Fasern des Fasermaterials durch den Druck auf die Messerkante geschnitten werden. Ein weiterer Abschnitt 22 wird von einem weiteren Halteelement 27 mit dem Walzenumfang mitbewegt. Die Halteelemente 27 sind mit einem Vakuumanschluss 33 versehen und werden besaugt, um den Abschnitt 22 an der Walze zu halten. Noch ein weiterer Abschnitt 22 ist bereits auf dem Platinenträger, der durch den Tisch 5 gebildet wird, abgelegt. Er wurde von einem Halteelement 27, das durch ein Federelement 32 nach außen gedrückt wurde, vom Walzenumfang 28 wegbewegt, mit einem Impuls versehen und auf den Tisch 25 übertragen. Die Vakuumversorgung wurde dabei unterbrochen, damit sich der Abschnitt 22 vom Halteelement 27 ablöst. Zusätzlich könnte auch ein kurzer Druckluftstoß durch die Vakuumöffnungen des Halteelementes 27 aufgebracht werden, um den Abschnitt 22 abzulösen. Optional ist eine Binderauftragsvorrichtung 34 gezeigt, die Bindermaterial auf die Halteelemente 27 dosieren kann. Die Bewegungsrichtung Y des Tisches 5, in der er verfahrbar ist, ist senkrecht zur Blattebene ausgerichtet. Dadurch werden die Abschnitte 2 quer zur Hauptfaserrichtung des Fasermaterials 1 abgelegt. Die Länge eines Abschnittes ist A.

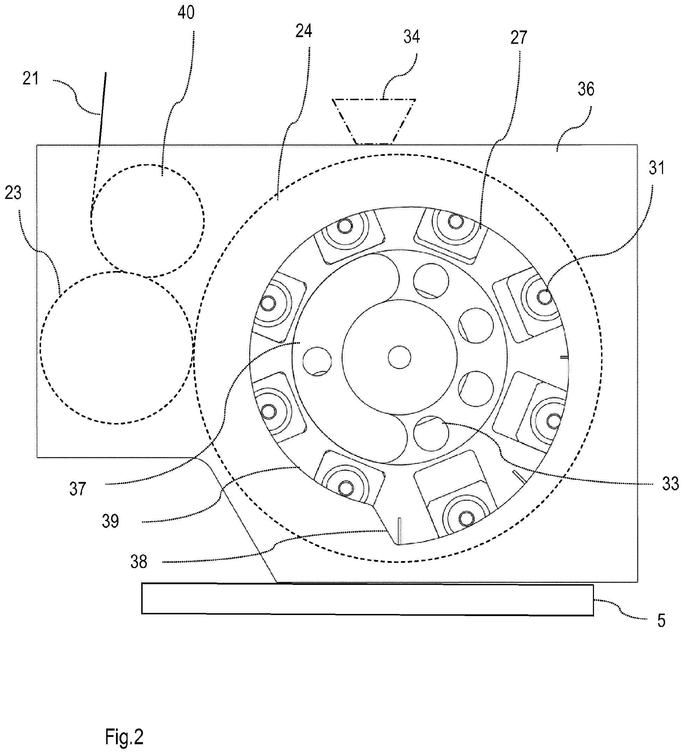

In **Fig.2** ist ein Ausschnitt wie in Fig.1 gezeigt, wobei das Ablegeschneidwerk mit einer Kulissenführung 36 für die Steuerung der Halteelemente 27 ausgeführt ist. Jedes Halteelement 27 weist eine Laufrolle 31 auf, die bevorzugt drehbar im Halteelement gelagert ist. Die Federelemente 32 drücken die Halteelemente 27 soweit nach außen, bis die jeweilige Laufrolle 31 an der Anschlagkante 39 der Kulissenführung 36 ansteht. Ein Stufensprung 38 im Bereich der Ablegeposition führt dazu, dass die federbelasteten Halteelemente 27 an dieser Stelle nach außen schnellen und gegen die Anschlagkante 39 schlagen. Dadurch wird der Abschnitt 22 vom Walzenumfang 28 wegbewegt und mit einem Impuls auf den Tisch 5 abgelegt. Die Vakuumversorgung erfolgt über einen stehenden Vakuumstutzen 37, der mit einer Unterdruckquelle verbunden ist. Der Vakuumstutzen 37 überdeckt die Vakuumanschlüsse 33 in dem Bereich, in dem die Abschnitte 22 gehalten werden sollen. In dem Bereich des Ablegens werden die Vakuumanschlüsse 33 freigegeben, so dass die Halteelemente 27 belüftet werden und die Haltekraft verschwindet. Der Abschnitt 22 kann sich vom Halteelement 27 ablösen und wird in der oben beschriebenen Weise abgelegt. Optional kann im Bereich des Ablegens zusätzlich ein Druckluftstutzen Luft in die Halteelemente zuführen, so dass die Abschnitte 22 vom Halteelement abgeblasen werden können. Die im weiteren Verlauf spiralförmig ausgeführte Anschlagkante 39 drückt die Halteelemente 27 über ihre Laufrolle 31 wieder in ihre Ausgangslage zurück.

Die Kulissenführung 36 kann einseitig oder bevorzugt auf Vorder- und Rückseite der Vorrichtung vorhanden sein. Durch eine beidseitige Ausführung wird ein Kippen der Halteelemente 27 sicher vermieden.

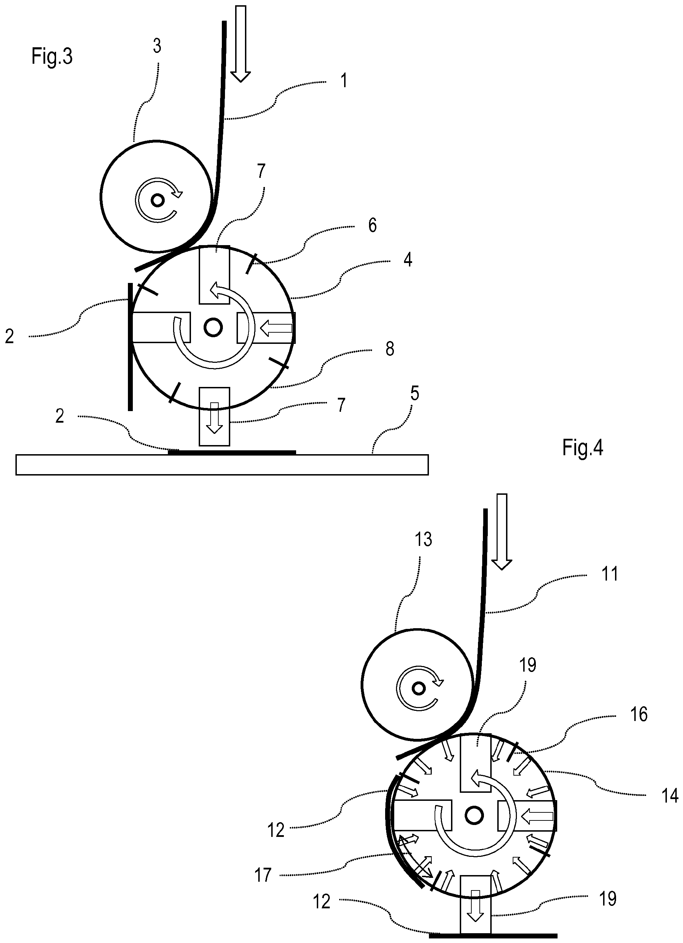

**Fig.3** zeigt eine vereinfachte schematische Darstellung eines Ausschnittes einer weiteren erfindungsgemäßen Vorrichtung. Das Fasermaterial 1 wird dem Ablegeschneidwerk zugeführt. Zwischen Gegenwalze 3 und Trennwalze 4 werden die Abschnitte 2 durch die Messer 6 geschnitten. Auch hier sind die Ablöseelemente als Stempelelemente und als Halteelemente 7 ausgeführt. Zum Ablegen der Abschnitte 2 auf dem Platinenträger, wieder als Tisch 5 ausgeführt, sind die Halteelemente 7 radial verschiebbar. Der Abschnitt 2 wird vom Halteelementen 7 von der Walzenoberfläche 8 wegbewegt, die Haltekraft zum Beispiel die Vakuumkraft wird reduziert und der Abschnitt 2 auf dem Tisch 5 abgelegt. Es ist aber auch möglich, dass die Haltekraft nicht reduziert wird, sondern durch den Einfluss des Ablöseelementes und/oder durch eine Anziehungskraft einer Transfereinheit oder des Platinenträgers überwunden wird. Insbesondere bei Verwendung elektrostatischer Anziehung als Haltekraft kann dieses Konzept verfolgt werden. Bevorzugt wird zwischen dem Ablöseelement (Halteelement 7) und dem Platinenträger (Tisch 5) ein minimaler Abstand beim Ablegen von größer 0 mm, insbesondere zwischen 1 und 10 mm vorgesehen. Auch wenn das in den anderen Figuren nicht explizit gezeigt ist, kann das Ablegen in den anderen beschriebenen Ausführungen ebenso mit Abstand größer als 0 mm und ohne direkte Berührung erfolgen.

Gegebenenfalls kann auch der Tisch so ausgeführt sein, dass er eine Haltekraft auf die abgelegten Abschnitte ausübt, beispielsweise kann er als Vakuumtisch mit besaugter Oberfläche oder mit elektrostatischer Aufladung ausgeführt sein. In bevorzugter Ausführung können die Stempelelemente, hier als Halteelemente 7 ausgeführt, außermittig zwischen zwei Messern 6 angeordnet sein, besonders bevorzugt derart, dass das Halteelement 7 entgegen der Drehrichtung der Trennwalze 4 zum benachbarten Messer 6 hin verschoben ist. Dadurch werden die Abschnitte 2 beim Schneiden gut fixiert.

In **Fig.4** wird eine andere Ausführung eines Ablegeschneidwerkes gezeigt. Die Haltebereiche 17, die den Abschnitt 12 nach dem Schneiden an der Trennwalze 14 halten, sind im Bereich der Oberfläche der Trennwalze 14 zwischen den Ablöseelementen, die als radial verschiebbare Stempelelemente 19 ausgeführt sind, vorhanden. Wie in der vorherigen Ausführung kann die Haltekraft, als radial nach innen gezeichnete Pfeile dargestellt, beispielsweise durch Vakuum oder elektrostatischen Anziehung erzeugt werden. Es können zwischen zwei Messern 6 auch wie dargestellt zwei Haltebereiche jeweils neben dem Ablöseelement vorhanden sein.

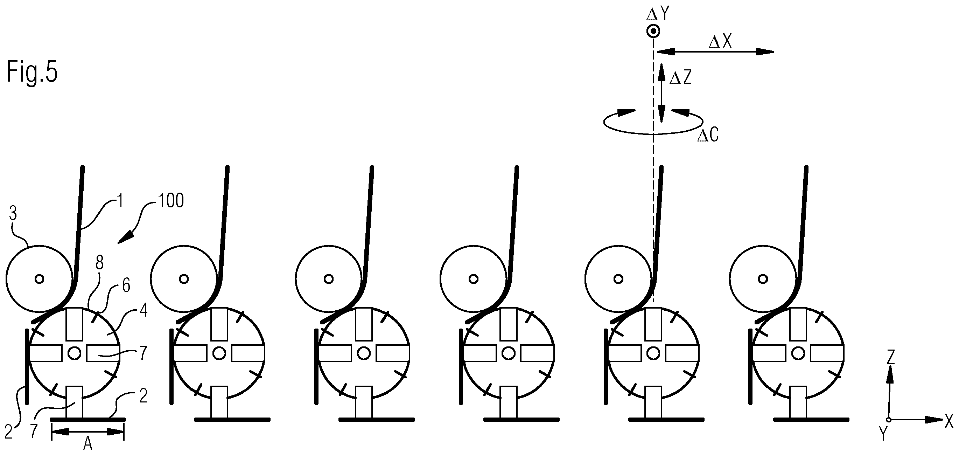

Die Darstellung in **Fig.5** zeigt eine erfindungsgemäße Vorrichtung mit sechs Ablegeschneidwerken 100. Gleiche Elemente in der Schemadarstellung sind mit gleichen Bezugszeichen versehen. Die Ablegeschneidwerke 100 sind um kleine Stellwege ΔX, ΔY, ΔZ, die bevorzugt kleiner sind als eine Abschnittlänge A, verschiebbar. Zusätzlich können sie auch um die Z-Achse drehbar (ΔC) sein. Je kleiner die Abstände zwischen zwei Ablegeschneidwerken 100 sind, desto geschlossener können die Abschnitte in einem Arbeitsgang abgelegt werden. In der dargestellten Anordnung könnte vor einer Weiterbewegung des nicht dargestellten Platinenträgers in Y-Richtung zunächst eine Seitwärtsbewegung in X-Richtung erfolgen, so dass die Lücken mit Abschnitten gefüllt werden. Alternativ könnte auch zunächst der Platinenträger in Y-Richtung bewegt werden und dann eine Seitwärtsbewegung in X-Richtung erfolgen, um die Lücken aufzufüllen.

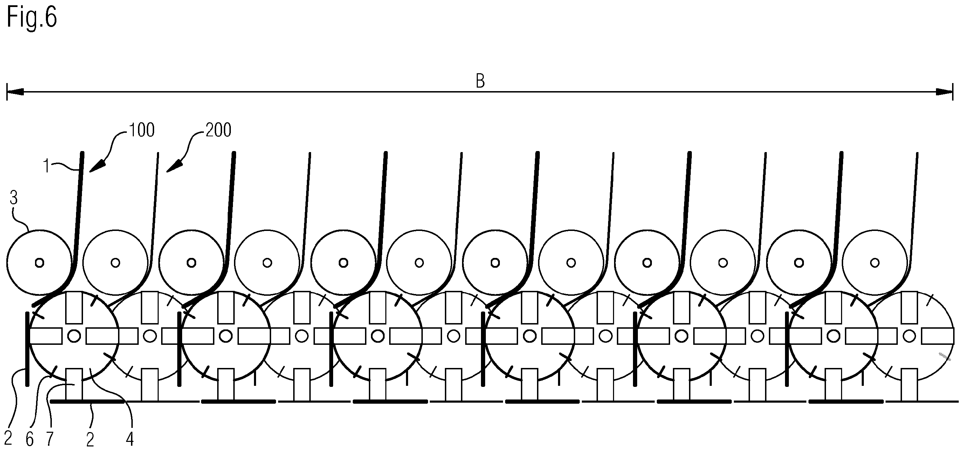

In **Fig.6** ist eine erfindungsgemäße Vorrichtung mit 12 Ablegeschneidwerken 100,200 - angeordnet in zwei Reihen hintereinander - zu sehen. Die gesamte Ablegebreite B kann gleichzeitig abgelegt werden. Durch die versetzte Anordnung der Ablegeschneidwerke auf Lücke bleibt genug Platz für Antriebs- und Versorgungsvorrichtungen der Ablegeschneidwerke. Durch Verfahren des nicht dargestellten Platinenträgers in Y-Richtung, hier senkrecht zur Blattebene, können die Abschnitte flächig geschlossen abgelegt werden, ohne dass die Ablegeschneidwerke in Ihrer Position verschoben werden müssen. Um eine noch höhere Ablegerate zu ermöglichen, können auch drei oder vier Reihen von hintereinander auf Lücke bzw. kaskadenartig versetzt angeordneten Ablegeschneidwerken vorhanden sein. Die Verschiebebewegung des Platinenträgers ist vorteilhafterweise an die Taktrate der Ablegeschneidwerke angepasst, so dass exakt die jeweiligen Lücken zwischen bereits abgelegten Abschnitten gefüllt werden. Andererseits kann auch eine gezielte Überlappung oder eine gezielte Lücke zwischen den abgelegten Abschnitten in einer Faserlage erzeugt werden. Die einzelnen Ablegeschneidwerke können so ausgeführt sein, dass sie einzeln in Geschwindigkeit, Stellweg und Spreizung gesteuert werden können.

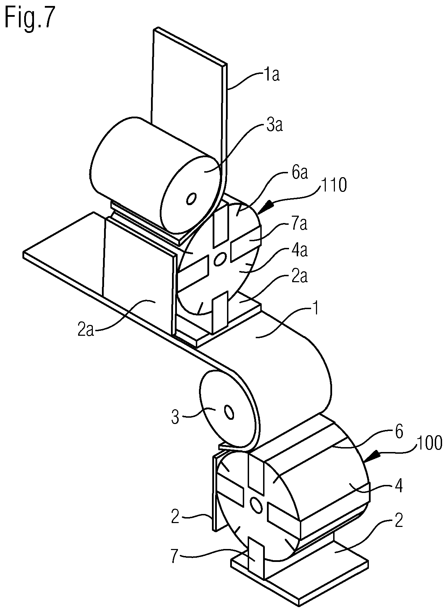

**Fig.7** zeigt ein Ablegeschneidwerk 100 mit einem zusätzlichen Ablegeschneidwerk 110, welches in den Achsen der Walzen 3a,4a quer, insbesondere senkrecht zu den Achsen der Walzen 3,4 angeordnet ist. Dadurch kann ein biaxialer Abschnitt aus dem Fasermaterial 1a und 1 erzeugt und abgelegt werden. Die Ausrichtung des zusätzlichen Ablegeschneidwerkes 110 kann auch schräg sein, so dass zwischen den zwei Abschnitten ein anderer Winkel als 90° entsteht. Um die beiden Abschnitte sicher zusammen transportieren zu können, kann eines der Fasermaterialien 1,1a Binder- oder Matrixmaterial enthalten oder es kann durch eine Binderauftragseinrichtung aufgebracht werden.

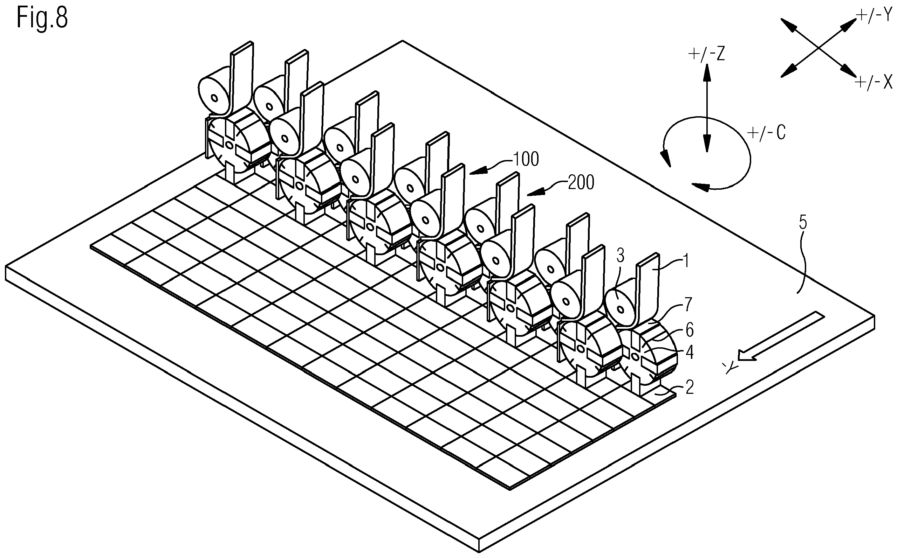

**Fig.8** ist eine perspektivische Darstellung einer erfindungsgemäßen Vorrichtung. Es sind wiederum zwölf Ablegeschneidwerke 100, 200 in zwei Reihen hintereinander angeordnet. Es ist zu sehen, wie durch die Verschiebung des Platinenträgers, hier des Tisches 5 in Y-Richtung eine geschlossene Faserlage aus Abschnitten 2 erzeugt werden kann. Nach einer ersten Faserlage können noch eine oder auch zahlreiche weitere Faserlagen aus Abschnitten 2 auf der ersten Faserlage abgelegt werden. Zwischen dem Ablegen der Faserlagen kann der Tisch 5 um die Z-Achse verdreht werden (+/-C) oder beziehungsweise zusätzlich in X-Richtung verschoben werden. So kann sehr flexibel eine gewünschte Faserstruktur aufgebaut werden. Zusätzlich ist auch eine Bewegung des Tisches 5 in Z-Richtung möglich, um beispielsweise den Abstand zwischen den Ablegeschneidwerken 100,200 und dem Platinenträger zu verändern. Zwischen dem Ablegen der einzelnen Faserlagen oder sukzessive nach dem Ablegen einer gewissen Anzahl von Abschnitten 2 oder auch nach dem Ablegen mehrerer Faserlagen beziehungsweise der gesamten Faserplatine kann eine Binderaktivierung erfolgen. Dies kann zum Beispiel über eine Erwärmung durch eine Heizeinrichtung erfolgen.

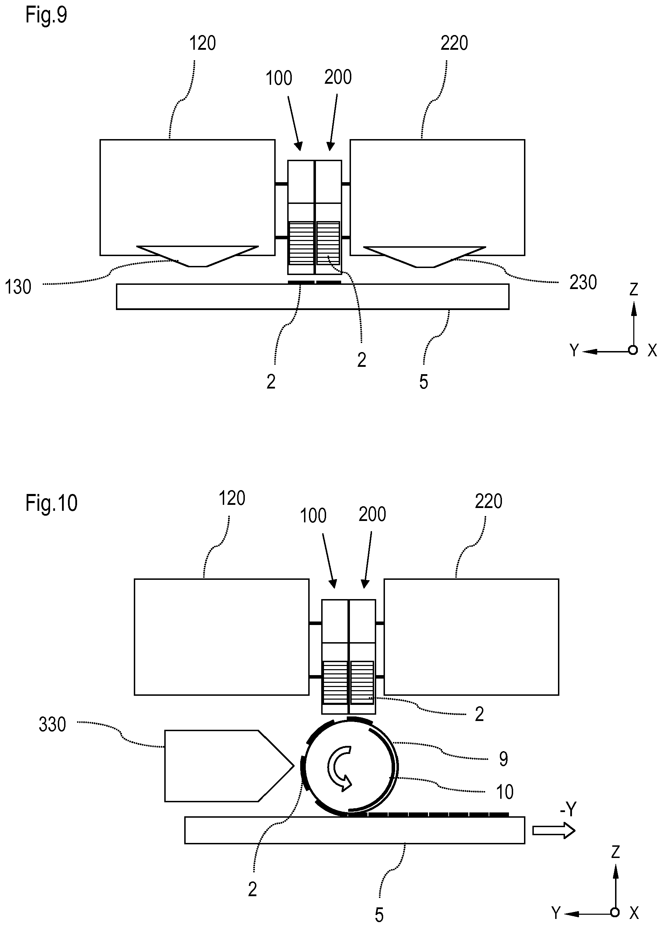

Die Darstellung in **Fig.9** zeigt eine schematische Seitenansicht. Eine erste Reihe von Ablegeschneidwerken 100 und eine zweite Reihe von Ablegeschneidwerken 200 sind direkt hintereinander angeordnet. Jeweils auf der Außenseite sind die nötigen Antriebs- und Versorgungseinrichtungen 120, 220 vorgesehen. Zusätzlich können jeweilige Binderauftragseinrichtungen 130 und/oder 230 vorhanden sein, die auf die abgelegten Abschnitte 2 Bindermaterial auftragen können. Auch in den anderen zuvor und nachher beschriebenen Ausführungen können Binderauftragseinrichtungen vorhanden sein. Durch ein Verschieben des Tisches 5 in Y-Richtung, der hier wiederum direkt als Platinenträger dient, kann eine geschlossene oder entsprechend der gewünschten Struktur vorgegebene Faserlage abgelegt werden.

**Fig.10** stellt eine weitere erfindungsgemäße Vorrichtung mit Transfereinheit 9 dar. Es ist wiederum eine Seitenansicht. Im Gegensatz zu den bisher beschriebenen Ausführungsformen werden die Abschnitte hier nicht direkt auf den als Platinenträger dienenden Tisch 5 abgelegt, sondern zunächst erst auf der Oberfläche der Transfereinheit 9. Die Transfereinheit 9 kann als Saugwalze, als Vakuumförderband oder als sonstige Walze oder Förderband, welche die Abschnitte halten und wieder abgeben kann, ausgeführt sein. Im dargestellten Beispiel ist eine innenliegende Vakuumabdeckung vorhanden, die dafür sorgt, dass die Abschnitte 2 von der Transfereinheit 9 auf den Tisch 5 übertragen werden können. Hier kann es von Vorteil sein, wenn der Platinenträger, also hier der Tisch 5, derart ausgeführt ist, dass er mit elektrostatischer Aufladung oder über Vakuum die Abschnitte anzieht und fixiert. Eine Binderauftragseinrichtung 330 kann auf der Transfereinheit 9 Bindermaterial auf die Abschnitte auftragen. Alternativ können auch die zuvor gezeigten Binderauftragseinrichtungen eingesetzt werden. Die Vorteile einer solchen Transfereinheit sind bereits zuvor genannt worden.

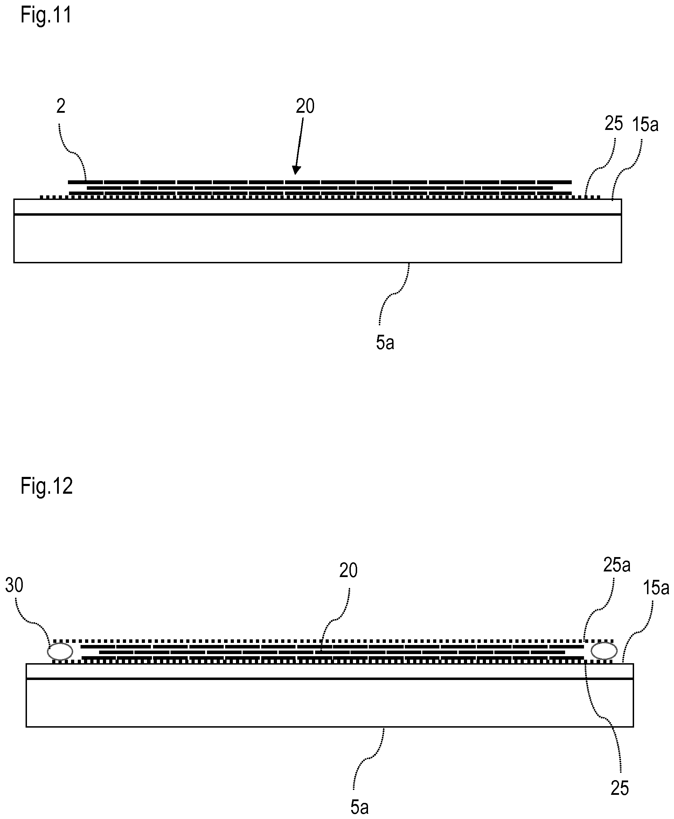

**Fig. 11** zeigt eine mögliche Faserplatine 20 mit mehreren Faserlagen, die jeweils aus mit einer erfindungsgemäßen Vorrichtung abgelegten Abschnitten 2 aufgebaut sind. Die Abschnitte 2 sind in diesem Fall auf einer Folie 25 abgelegt worden, welche als Platinenträger dient. Die Folie 25 liegt ihrerseits auf einer Trägerplatte 15a, die mit dem Tisch 5a verbunden ist. Zur Weiterverarbeitung kann die Trägerplatte 15a vom Tisch 5a gelöst werden. Für die Herstellung der nächsten Platinen wird eine neue Trägerplatte aufgelegt. In **Fig.12** ist eine Variante zu sehen, bei der die abgelegte und unter Umständen mit Bindermaterial fixierte oder bereits mit Matrixmaterial imprägniert Faserplatine 20 zwischen zwei Folien 25 und 25a angeordnet ist. Zusätzlich ist eine Dichtung 30 ringsum zwischen den Folien vorgesehen. Wird nun die Faserplatine 20 zwischen den Folien evakuiert, kann sie sehr gut zusammen mit der Trägerplatte transportiert werden und dann beispielsweise in einer Umformeinrichtung geformt werden. Durch die Verwendung von Trägerplatten 15a kann ein weitgehend automatisierter Transport zwischen den Arbeitsschritten in einer Fertigungsstraße realisiert werden.

Die in Fig.11 und 12 dargestellten Varianten sind für alle gezeigten und beschriebenen Ausführungen anwendbar. Außerdem können die Abschnitte auch ohne dazwischenliegende Folie auf einer Trägerplatte, die dann als Platinenträger dient, abgelegt werden.

### Bezugszeichenliste

- 1, 1a, 11, 21: Fasermaterial
- 2, 2a, 12, 22: Abschnitt
- 3, 3a, 13, 23: Gegenwalze
- 4, 4a, 14, 24: Trennwalze
- 5, 5a: Ablegetisch
- 6, 6a, 16, 26: Messer
- 7, 7a, 27: Halteelement
- 8, 28: Walzenumfang
- 9: Transfereinheit
- 10: Vakuumabdeckung

- 15, 15a: Trägerplatte
- 17: Haltebereich
- 19: Stempelelement
- 20: Faserplatine
- 25, 25a: Folie
- 29: Vertiefung
- 30: Abdichtung
- 31: Laufrolle
- 32: Federelement
- 33: Vakuumanschluss
- 34, 130, 230, 330: Binderauftragseinrichtung
- 36: Kulissenführung
- 37: Vakuumstutzen
- 38: Stufensprung der Anschlagkante
- 39: Anschlagkante
- 40: Anpresswalze

- 100: Ablegeschneidwerk der ersten Reihe
- 110: zusätzliches Ablegeschneidwerk
- 120, 220: Antriebs- und Versorgungsvorrichtung
- 200: Ablegeschneidwerk der zweiten Reihe

- A: Länge des Abschnitts
- B: Ablegebreite
- ΔC: Drehung um Z-Achse
- ΔX: kleine Verschiebung in X-Richtung
- ΔZ: kleine Verschiebung in Y-Richtung
- ΔZ: kleine Verschiebung in Z-Richtung

## Patentansprüche

1. Vorrichtung zum Herstellen von Faserplatinen (20) aufweisend einen Platinenträger (5,15,25) und mehrere, mindestens vier Schneidwerke (100,200) zum Trennen von Fasermaterial (1,11,21), insbesondere von strang- oder bandförmigem Fasermaterial, in Abschnitte (2,12,22) und zum Ablegen der Abschnitte (2,12,22),
wobei diese Ablegeschneidwerke (100,200) je eine Trennwalze (4,14,24) mit mehreren am Walzenumfang der Trennwalze (4,14,24) angeordneten Messern (6,16,26,46) und je eine Gegenwalze (3,13,23) aufweisen, die gegenläufig rotierbar sind und die so angeordnet sind, dass das Fasermaterial (1,11,21) zwischen Trennwalze (4,14,24) und Gegenwalze (3,13,23) hindurchgeführt und dabei von einem der Messer (6,16,26,46) im Zusammenwirken mit der Gegenwalze (3,13,23) durchtrennt werden kann, so dass dadurch ein Abschnitt (2,12,22) entsteht,
wobei an der Gegenwalze (3,13,23) oder an der Trennwalze (4,14,24) mehrere integrierte Haltebereiche (7,17,27) und mehrere Ablöseelemente (7,19,27) vorhanden sind, so ausgebildet, dass jeweils zumindest einer der Haltebereiche (7,17,27) eine Haltekraft auf einen jeweiligen Abschnitt (2,12,22) ausüben kann, wodurch der Abschnitt (2,12,22) an der Walze (3,13,23,4,14,24) mit den Haltebereichen gehalten und nach dem Durchtrennen ein Stück mit dem Walzenumfang dieser Walze (3,13,23,4,14,24) mitbewegt werden kann, und wobei die Ablöseelemente (7,19,27) derart ausgebildet sind, dass sie zum Ablegen den Abschnitt (2,12,22) vom Walzenumfang (8,28) weg bewegen können und derart dass der jeweilige Abschnitt (2,12,22) nach der Mitbewegung an der Walze abgelegt werden kann,
wobei der Platinenträger (5,15,25) unter den Ablegeschneidwerken (100,200) hindurch in zumindest eine Bewegungsrichtung (Y) verschiebbar ist,
und wobei die Ablegeschneidwerke (100,200) im Wesentlichen stationär und derart nebeneinander angeordnet sind, dass die Abschnitte (2,12,22) dieser Ablegeschneidwerke (100,200) gleichzeitig nebeneinander auf den Platinenträger (5,15,25) abgelegt werden können.

2. Vorrichtung nach Anspruch 1
**dadurch gekennzeichnet,**
**dass** eine oder mehrere Transfereinheiten (9) vorgesehen sind, die so ausgebildet sind, dass die jeweiligen Abschnitte (2,2a,12,22) von den Ablöseelementen (7,7a,19,27) zunächst auf der Oberfläche der Transfereinheit (9) abgelegt werden und von dort auf den Platinenträger (5,15,25) übertragen werden können.

3. Vorrichtung nach Anspruch 1 oder 2
**dadurch gekennzeichnet,**
**dass** sie so ausgebildet ist, dass der geringste Abstand beim Ablegen zwischen Stempelelement (7,7a,19,27) und Platinenträger (5,15,25) oder zwischen Ablöseelement (7,7a,19,27) und Oberfläche der Transfereinheit (9) zwischen 0 und 70 mm, bevorzugt zwischen 1 und 10 mm beträgt.

4. Vorrichtung nach einem der vorherigen Ansprüche
**dadurch gekennzeichnet,**
**dass** eine oder mehrere Binderauftragseinrichtungen (34,130,230,330) vorgesehen sind, die so angeordnet sind, dass sie Bindermaterial auf die Abschnitte vor oder nach dem Ablegen auf dem Platinenträger (5,15,25) auftragen können.

5. Vorrichtung nach einem der vorherigen Ansprüche
**dadurch gekennzeichnet,**
**dass** die Ablöseelemente als im Wesentlichen radial verschiebbare Stempelelemente (7,7a,19,27) ausgeführt sind und/oder als Halteelemente (7,7a,27) mit integriertem Haltebereich ausgeführt sind.

6. Vorrichtung nach einem der vorherigen Ansprüche
**dadurch gekennzeichnet,**
**dass** die Haltebereiche (7,7a,17,27) und die entsprechende Walze so ausgeführt sind, dass die Haltekraft durch Vakuum oder durch elektrostatische Anziehung erzeugt werden kann.

7. Vorrichtung nach einem der vorherigen Ansprüche
**dadurch gekennzeichnet,**
**dass** die Ablegeschneidwerke (100,200) in zwei oder mehr Reihen in Bewegungsrichtung (Y) des Platinenträgers (5,15,25) hintereinander angeordnet sind, insbesondere dass die Ablegeschneidwerke (100) einer Reihe auf Lücke zu den Ablegeschneidwerken (200) der anderen Reihe angeordnet sind.

8. Vorrichtung nach einem der vorherigen Ansprüche
**dadurch gekennzeichnet,**
**dass** die Ablegeschneidwerke (100,200) um geringe Stellwege (ΔX, ΔY, ΔZ), die kleiner sind als die Länge A der Abschnitte, in ihrer stationären Position verschoben werden können und/oder um die senkrecht zum Platinenträger (5,15,25) gedachte Z-Achse gedreht werden können (ΔC).

9. Vorrichtung nach einem der vorherigen Ansprüche
**dadurch gekennzeichnet,**
**dass** die Ablegeschneidwerke (100,200) einzeln gesteuert werden können.

10. Vorrichtung nach einem der vorherigen Ansprüche
**dadurch gekennzeichnet,**
**dass** der Platinenträger (5,15,25) zusätzlich auch quer zur Bewegungsrichtung (Y) in X-Richtung und/oder in der Höhe Z bewegt werden kann und/oder um die senkrecht zum Platinenträger (5,15,25) gedachte Z-Achse gedreht werden kann.

11. Vorrichtung nach einem der vorherigen Ansprüche
**dadurch gekennzeichnet,**
**dass** der Platinenträger als Trägerplatte (15) oder als Folie (25) ausgebildet ist, welche auf einem zumindest in Bewegungsrichtung (Y) bewegbaren Tisch (5a) angeordnet ist.

12. Vorrichtung nach einem der vorherigen Ansprüche
**dadurch gekennzeichnet,**
**dass** zusätzliche Ablegeschneidwerke (110) vorhanden sind, die geeignet sind Fasermaterial (1a) in Abschnitte (2a) zu trennen und diese Abschnitte (2a) auf dem Fasermaterial (1) vor oder beim Einzug in das Ablegeschneidwerk (100,200) abzulegen.

13. Verfahren zum Herstellen von Faserplatinen (20) unter Verwendung einer Vorrichtung nach einem der vorherigen Ansprüche,
wobei die folgenden Schritte a)-d) nacheinander ausgeführt werden:
a) Trennen eines jeweiligen Abschnittes (2,2a,12,22) vom Fasermaterial (1,1a,11,21) gleichzeitig in den mehreren Ablegeschneidwerken,
b) Halten des jeweiligen Abschnittes (2,2a,12,22) an der Gegenwalze (3,3a,13,23) oder an der Trennwalze (4,4a,14,24) und Mitbewegen des Abschnittes (2,2a,12,22) mit dem Walzenumfang (8,28) dieser Walze gleichzeitig in den mehreren Ablegeschneidwerken,
c) Nebeneinander-Ablegen der jeweiligen Abschnitte (2,2a,12,22) gleichzeitig durch die mehreren Ablegeschneidwerke, und
d) Bewegen des Platinenträgers (5,15,25) in zumindest eine Bewegungsrichtung (Y),
e) Mehrmalige Wiederholung der Schritte a)-d), derart dass eine Lage aus Abschnitten (2,2a,12,22) auf dem Platinenträger (5,15,25) erzeugt wird,
und wobei eine oder mehrere weitere Lagen aus Abschnitten (2,2a,12,22) auf der ersten Lage erzeugt werden, indem die Schritte a-e) wiederholt werden.

14. Verfahren nach Anspruch 13
**dadurch gekennzeichnet,**
**dass** auf die Abschnitte (2,2a,12,22) nach dem Ablegen Bindermaterial aufgetragen wird, wobei dieser Binderauftrag insbesondere zwischen Schritt c) und d) oder insbesondere nach Schritt e) und vor Ablegen einer weiteren Lage erfolgt.

15. Verfahren nach Anspruch 13 oder 14
**dadurch gekennzeichnet,**
**dass** der Platinenträger (5,15,25) nach Schritt e) und vor Ablegen einer weiteren Lage in eine Richtung (X) quer zur Bewegungsrichtung (Y) verschoben und/oder in einer Richtung (C) um die senkrecht zum Platinenträger gedachte Z-Achse gedreht wird.

## Claims

1. Device for manufacturing fibrous boards (20), having a board carrier (5, 15, 25) and a plurality of at least four cutting tools (100, 200) for separating fibrous material (1, 11, 21), in particular strand-shaped or tape-shaped fibrous material, into portions (2, 12, 22), and for depositing the portions (2, 12, 22),
wherein these depositing cutting tools (100, 200) each have one separation roller (4, 14, 24) having a plurality of cutters (6, 16, 26, 46), which are disposed on the roller circumference of the separation rollers (4, 14, 24), and each have one counter roller (3, 13, 23), the latter and said separation roller (4, 14, 24) being rotatable in opposite directions and being disposed such that the fibrous material (1, 11, 21) is guided through between the separation roller (4, 14, 24) and the counter roller (3, 13, 23) and thereby by interaction with the counter roller (3, 13, 23) may be severed by one of the cutters (6, 16, 26, 46) such that a portion (2, 12, 22) is created on account thereof,
wherein a plurality of integrated retaining regions (7, 17, 27) and a plurality of releasing elements (7, 19, 27) are present on the counter roller (3, 13, 23) or on the separation roller (4, 14, 24), configured such that in each case at least one of the retaining regions (7, 17, 27) may exert a retaining force on a respective portion (2, 12, 22), on account of which the portion (2, 12, 22) is retained on the roller (3, 13, 23, 4, 14, 24) having the retaining regions and, after severing, may be moved conjointly with the roller circumference of this roller (3, 13, 23, 4, 14, 24) by a distance, and wherein the releasing elements (7, 19, 27) are configured in such a manner that the same for depositing may move the portion (2, 12, 22) away from the roller circumference (8, 28), and in such a manner that the respective portion (2, 12, 22) after having been conjointly moved on the roller may be deposited,
wherein the board carrier (5, 15, 25) is displaceable below the depositing cutting tools (100, 200) therethrough in at least one movement direction (Y),
and wherein the depositing cutting tools (100, 200) are substantially stationary and are disposed beside one another in such a manner that the portions (2, 12, 22) of these depositing cutting tools (100, 200) may be simultaneously deposited beside one another on the board carrier (5, 15, 25).

2. Device according to Claim 1,
**characterized in**
**that** one or a plurality of transfer units (9) which are configured such that the respective portions (2, 2a, 12, 22) from the releasing elements (7, 7a, 19, 27) are initially deposited on the surface of the transfer unit (9), and from there may be transferred onto the board carrier (5, 15, 25) are provided.

3. Device according to Claim 1 or 2,
**characterized in**
**that** said device is configured such that the minimum spacing when depositing between the die element (7, 7a, 19, 27) and the board carrier (5, 15, 25), or between the releasing element (7, 7a, 19, 27) and the surface of the transfer unit (9) is between 0 and 70 mm, preferably between 1 and 10 mm.

4. Device according to one of the preceding claims,
**characterized in**
**that** one or a plurality of binder application installations (34, 130, 230, 330) which are disposed such that said binder application installations (34, 130, 230, 330) may apply binder material onto the portions before or after the latter are deposited on the board carrier (5, 15, 25) are provided.

5. Device according to one of the preceding claims,
**characterized in**
**that** the releasing elements are embodied as die elements (7, 7a, 19, 27) which are displaceable in a substantially radial manner, and/or are embodied as retaining elements (7, 7a, 27) having an integrated retaining region.

6. Device according to one of the preceding claims,
**characterized in**
**that** the retaining regions (7, 7a, 17, 27) and the respective roller are embodied such that the retaining force may be generated by a vacuum or by electrostatic attraction.

7. Device according to one of the preceding claims,
**characterized in**
**that** the depositing cutting tools (100, 200) in the movement direction (Y) of the board carrier (5, 15, 25) are sequentially disposed in two or more rows, in particular such that the depositing cutting tools (100) of one row are disposed so as to form a gap in relation to the depositing cutting tools (200) of the other row.

8. Device according to one of the preceding claims,
**characterized in**
**that** the depositing cutting tools (100, 200) may be displaced in terms of the stationary position thereof by minor actuation paths (ΔX, ΔY, ΔZ) which are smaller than the length A of the portions, and/or may be rotated (ΔC) about the imaginary Z axis which is perpendicular to the board carrier (5, 15, 25).

9. Device according to one of the preceding claims,
**characterized in**
**that** the depositing cutting tools (100, 200) may be individually controlled.

10. Device according to one of the preceding claims,
**characterized in**
**that** the board carrier (5, 15, 25) may additionally also be moved transversely to the movement direction (Y), in the direction X, and/or along the height Z, and/or about the imaginary Z axis which is perpendicular to the board carrier (5, 15, 25).

11. Device according to one of the preceding claims,
**characterized in**
**that** the board carrier is configured as a support plate (15) or as a film (25) which is disposed on a table (5a) which is movable at least in the movement direction (Y).

12. Device according to one of the preceding claims,
**characterized in**
**that** additional depositing cutting tools (110) which are suitable for separating fibrous material (1a) into portions (2a) and for depositing these portions (2a) on the fibrous material (1) before or while the latter is drawn into the depositing cutting tool (100, 200) are provided.

13. Method for manufacturing fibrous boards (20), using a device according to one of the preceding claims,
wherein the following steps a) to d) are carried out in sequence:
a) separating a respective portion (2, 2a, 12, 22) of fibrous material (1, 1a, 11, 21) simultaneously in the plurality of depositing cutting tools;
b) retaining the respective portion (2, 2a, 12, 22) on the counter roller (3, 3a, 13, 23) or on the separation roller (4, 4a, 14, 24), and moving the portion (2, 2a, 12, 22) conjointly with the roller circumference (8, 28) of this roller simultaneously in the plurality of depositing cutting tools;
c) depositing the respective portions (2, 2a, 12, 22) beside one another simultaneously by way of the plurality of depositing cutting tools; and
d) moving the board carrier (5, 15, 25) in at least one movement direction (Y);
e) repeating steps a) to d) multiple times in such a manner that a layer of portions (2, 2a, 12, 22) is produced on the board carrier (5, 15, 25), and wherein one or a plurality of further layers of portions (2, 2a, 12, 22) are produced on the first layer by repeating steps a) to e).

14. Method according to Claim 13,
**characterized in**
**that** binder material is applied onto the portions (2, 2a, 12, 22) after the latter have been deposited, wherein this binder application is performed in particular between steps c) and d), or in particular after step e) and prior to a further layer being deposited.

15. Method according to Claim 13 or 14,
**characterized in**
**that** the board carrier (5, 15, 25) after step e) and prior to a further layer being deposited is displaced in a direction (X) which is transverse to the movement direction (Y), and/or is rotated in a direction (C) about the Z axis imagined perpendicular to the board carrier.

## Revendications

1. Dispositif pour la fabrication de platines de fibres (20), présentant un support de platines (5, 15, 25) et plusieurs, au moins quatre, mécanismes de coupe (100, 200) pour couper un matériau de fibres (1, 11, 21), en particulier un matériau de fibres en forme de cordon ou de bande, en portions (2, 12, 22) et pour déposer les portions (2, 12, 22),
dans lequel ces mécanismes de coupe-dépôt (100, 200) présentent chacun un cylindre de coupe (4, 14, 24) avec plusieurs couteaux (6, 16, 26, 46) disposés à la périphérie cylindrique du cylindre de coupe (4, 14, 24) et chacun un cylindre opposé (3, 13, 23), qui peuvent tourner en sens contraire et qui sont disposés de telle manière que le matériau de fibres (1, 11, 21) puisse être conduit entre le cylindre de coupe (4, 14, 24) et le cylindre opposé (3, 13, 23) et ainsi être coupé par un des couteaux (6, 16, 26, 46) en coopération avec le cylindre opposé (3, 13, 23), de telle manière qu'il se forme ainsi une portion (2, 12, 22),
dans lequel il se trouve sur le cylindre opposé (3, 13, 23) ou sur le cylindre de coupe (4, 14, 24) plusieurs zones de maintien intégrées (7, 17, 27) et plusieurs éléments de décollement (7, 19, 27), réalisés de telle manière qu'au moins une des zones de maintien (7, 17, 27) puisse respectivement exercer une force de maintien sur une portion respective (2, 12, 22), par laquelle la portion (2, 12, 22) peut être maintenue sur le cylindre (3, 13, 23, 4, 14, 24) avec les zones de maintien et qu'après la coupe une pièce puisse être entraînée avec la périphérie cylindrique de ce cylindre (3, 13, 23, 4, 14, 24), et dans lequel les éléments de décollement (7, 19, 27) sont réalisés de telle manière qu'ils puissent pour le dépôt éloigner la portion (2, 12, 22) de la périphérie cylindrique (8, 28) et de telle manière que la portion respective (2, 12, 22) puisse être déposée après l'entraînement sur le cylindre,
dans lequel le support de platines (5, 15, 25) peut être déplacé sous les mécanismes de coupe-dépôt (100, 200) dans au moins une direction de mouvement (Y),
et dans lequel les mécanismes de coupe-dépôt (100, 200) sont disposés de façon essentiellement stationnaire et l'un à côté de l'autre, de telle manière que les portions (2, 12, 22) de ces mécanismes de coupe-dépôt (100, 200) puissent être déposées simultanément l'une à côté de l'autre sur le support de platines (5, 15, 25).

2. Dispositif selon la revendication 1, **caractérisé en ce qu'**il est prévu une ou plusieurs unité(s) de transfert (9), qui est/sont réalisée(s) de telle manière que les portions respectives (2, 2a, 12, 22) puissent être d'abord déposées par les éléments de décollement (7, 7a, 19, 27) sur la surface de l'unité de transfert (9) et transférées de celle-ci sur le support de platines (5, 15, 25).

3. Dispositif selon la revendication 1 ou 2, **caractérisé en ce qu'**il est réalisé de telle manière que la plus petite distance lors du dépôt entre un élément de tampon (7, 7a, 19, 27) et le support de platines (5, 15, 25) ou entre un élément de décollement (7, 7a, 19, 27) et la surface de l'unité de transfert (9) se situe entre 0 et 70 mm, de préférence entre 1 et 10 mm.

4. Dispositif selon l'une quelconque des revendications précédentes, **caractérisé en ce qu'**il est prévu un ou plusieurs dispositif(s) d'application de liant (34, 130, 230, 330), qui est/sont disposé (s) de telle manière qu'il(s) puisse(nt) appliquer un matériau liant sur les portions avant ou après le dépôt sur le support de platines (5, 15, 25).

5. Dispositif selon l'une quelconque des revendications précédentes, **caractérisé en ce que** les éléments de décollement sont réalisés sous la forme d'éléments de tampon (7, 7a, 19, 27) déplaçables essentiellement radialement et/ou sont réalisés sous la forme d'éléments de maintien (7, 7a, 27) avec une zone de maintien intégrée.

6. Dispositif selon l'une quelconque des revendications précédentes, **caractérisé en ce que** les zones de maintien (7, 7a, 17, 27) et le cylindre correspondant sont réalisés de telle manière que la force de maintien puisse être produite par le vide ou par attraction électrostatique.

7. Dispositif selon l'une quelconque des revendications précédentes, **caractérisé en ce que** les mécanismes de coupe-dépôt (100, 200) sont disposés l'un derrière l'autre en deux ou plusieurs rangées dans la direction de mouvement (Y) du support de platines (5, 15, 25), en particulier **en ce que** les mécanismes de coupe-dépôt (100) d'une rangée sont disposés en quinconce par rapport aux mécanismes de coupe-dépôt (200) de l'autre rangée.

8. Dispositif selon l'une quelconque des revendications précédentes, **caractérisé en ce que** les mécanismes de coupe-dépôt (100, 200) peuvent être déplacés dans leur position stationnaire de petites courses (ΔX, ΔY, ΔZ), qui sont plus courtes que la longueur A des portions, et/ou peuvent être tournés (ΔC) autour de l'axe virtuel Z perpendiculaire au support de platines (5, 15, 25).

9. Dispositif selon l'une quelconque des revendications précédentes, **caractérisé en ce que** les mécanismes de coupe-dépôt (100, 200) peuvent être commandés individuellement.

10. Dispositif selon l'une quelconque des revendications précédentes, **caractérisé en ce que** le support de platines (5, 15, 25) peut en outre être déplacé aussi transversalement à la direction de mouvement (Y) dans la direction X et/ou suivant la hauteur Z et/ou peut être tourné autour de l'axe virtuel Z perpendiculaire au support de platines (5, 15, 25).

11. Dispositif selon l'une quelconque des revendications précédentes, **caractérisé en ce que** le support de platines est réalisé sous la forme d'une plaque de support (15) ou d'une feuille (25), qui est disposée sur une table (5a) déplaçable dans au moins une direction de mouvement (Y).

12. Dispositif selon l'une quelconque des revendications précédentes, **caractérisé en ce qu'**il se trouve des mécanismes de coupe-dépôt supplémentaires (110), qui sont aptes à couper un matériau de fibres (1a) en portions (2a) et à déposer ces portions (2a) sur le matériau de fibres (1) avant ou lors de l'engagement dans le mécanisme de coupe-dépôt (100, 200).

13. Procédé pour la fabrication de platines de fibres (20) avec utilisation d'un dispositif selon l'une quelconque des revendications précédentes, dans lequel on exécute successivement les étapes suivantes a)-d):
a) couper une portion respective (2, 2a, 12, 22) du matériau de fibres (1, 1a, 11, 21) simultanément dans les multiples mécanismes de coupe-dépôt,
b) maintenir la portion respective (2, 2a, 12, 22) sur le cylindre opposé (3, 3a, 13, 23) ou sur le cylindre de coupe (4, 4a, 14, 24) et entraîner la portion (2, 2a, 12, 22) avec la périphérie cylindrique (8, 28) de ce cylindre simultanément dans les multiples mécanismes de coupe-dépôt,
c) déposer l'une à côté de l'autre les portions respectives (2, 2a, 12, 22) simultanément à travers les multiples mécanismes de coupe-dépôt, et
d) déplacer le support de platines (5, 15, 25) dans au moins une direction de mouvement (Y),
e) répéter plusieurs fois les étapes a)-d), de telle manière qu'une couche de portions (2, 2a, 12, 22) soit produite sur le support de platines (5, 15, 25),
et dans lequel on produit une ou plusieurs autres couches de portions (2, 2a, 12, 22) sur la première couche, en répétant les étapes a)-e).

14. Procédé selon la revendication 13, **caractérisé en ce que** l'on applique un matériau liant sur les portions (2, 2a, 12, 22) après le dépôt, dans lequel on effectue cette application de liant en particulier entre l'étape c) et l'étape d) ou en particulier après l'étape e) et avant le dépôt d'une autre couche.

15. Procédé selon la revendication 13 ou 14, **caractérisé en ce que** l'on déplace le support de platines (5, 15, 25) après l'étape e) et avant le dépôt d'une autre couche dans une direction (X) transversale à la direction de mouvement (Y) et/ou on le fait tourner dans une direction (C) autour de l'axe virtuel Z perpendiculaire au support de platines.
